# EUROPEAN PATENT APPLICATION

(11) **EP 2 892 186 A1**
(43) Date of publication of application: **08.07.2015**
(21) Application number: 14305001.1
(22) Date of filing: 02.01.2014
(51) Int. Cl.: H04L 12/58

(54) **Method and server enabling a first user to automatically discover the social network identifiers of a second user and the respective statuses of this second user in these social networks**

(71) Applicant: ALCATEL LUCENT, 92100 Boulogne-Billancourt (FR)
(72) Inventor: Le Gall, Jean-Christophe, 44708 Orvault (FR)
(74) Representative: Sciaux, Edmond

(57) **Abstract**

An embodiment of the method enabling first user (A) to automatically discover the social network identifiers of a second user (B) and the respective statuses of this second user in the corresponding social networks comprises the steps of:
- receiving (101), in a first server (AS1), a request message from the first user, this request message containing an identifier of the second user, and requesting the list of the social network identifiers corresponding to the social networks to which the second user has subscribed; and the current statuses of the second user respectively in the corresponding social networks;
- checking, in the first server (AS1), if the first user (A) has subscribed to a service for discovering the social network identifiers of a second user and the respective statuses of this second user in these social networks;
- and sending (102) a second request message from the first server (AS1) towards the second user (B):
-- if the checking in the first server (AS1) is positive, the second request message requests the list of the social network identifiers corresponding to the social networks to which the second user has subscribed and the current statuses of the second user in the corresponding social networks;
-- if the checking is negative, the second request message does not request the list of the social network identifiers corresponding to the social networks to which the second user has subscribed and the current statuses of the second user in the corresponding social networks

## Description

### BACKGROUND OF THE INVENTION

### Field of the invention

The present invention generally relates to the communication services for voice communication, instant messaging, etc, via "other the top" (OTT) applications (Such as Skype, Googletalk, Viber, etc, i. e. services that are not supplied by the traditional telcos or Internet service providers, but are supplied by social networks). For instance, it concerns the users that have subscribed to an Internet protocol multimedia subsystem (IMS) network or to an Internet access.

### Description of the prior art

At the present time, when a first user wants to communicate with a second user without knowing by which communication service this friend can be reached, this first user must manually launch all the "over the top" communication applications that are available on his/her terminal. If the second user has subscribed to at least one communication service corresponding to one of these communication applications, the first user can read the identifier and the status (On/Off/Busy) of the second user for each communication service. If the status of the second user indicates that he/she is currently available on several communication services, then the first user selects one of these communication services, and calls the second user with the selected service.

Manually launching several communication applications is a waste of time for the first user. The first user may give up contacting the second user because this access method is not very convenient. Furthermore the first user doesn't know all the applications that enable to reach the second user and the second user's identifier in each application.

Thus, there is a need to provide a method for automatically discovering the social network identifiers and statuses of a user, in view of automatically establishing a communication (telephony or messaging) via a social network.

This can be solved by applying, the method, the user agent, and the server according to the invention.

### SUMMARY OF THE INVENTION

A first object of the invention is a method enabling a first user to automatically discover the social network identifiers of a second user and the respective statuses of this second user in the corresponding social networks, comprising the steps of:
- receiving, in a first server, a request message from the first user, this request message containing an identifier of the second user, and requesting the list of the social network identifiers corresponding to the social networks to which the second user has subscribed; and the current statuses of the second user respectively in the corresponding social networks;
- checking, in the first server, if the first user has subscribed to a service for discovering the social network identifiers of a second user and the respective statuses of this second user in these social networks;
- and sending a second request message from the first server towards the second user:
   -- if the checking in the first server is positive, the second request message requests the list of the social network identifiers corresponding to the social networks to which the second user has subscribed and the current statuses of the second user in the corresponding social networks;
   -- if the checking is negative, the second request message does not request the list of the social network identifiers corresponding to the social networks to which the second user has subscribed and the current statuses of the second user in the corresponding social networks.

Thanks to the request message containing an identifier of the second user and requesting the list of the social network identifiers corresponding to the social networks to which the second user has subscribed, and the current statuses of the second user respectively in the corresponding social networks, the second user will respond by a response message carrying the requested information up to the first user, thus enabling the user agent of the first user to automatically or manually select and set up a communication with the second user via a social network to which both have subscribed and are accessible.

Thanks to the checking, in the first server, that the first user has subscribed to a service for discovering the social network identifiers of a second user and the respective statuses of this second user in these social networks, the access to this service is restricted to callers that have subscribed to this service.

A second object of the invention is a user agent comprising machine executable program instructions, which, when executed on a computer, cause the computer to perform some steps of this method.

A third object of the invention is a server comprising machine executable program instructions, which, when executed on a computer, cause the computer to perform some steps of this method.

Other features and advantages of the present invention will become more apparent from the following detailed description of embodiments of the present invention, when taken in conjunction with the accompanying drawings.

### BRIEF DESCRIPTION OF THE DRAWINGS

In order to illustrate in detail features and advantages of embodiments of the present invention, the following description will be with reference to the accompanying drawings. If possible, like or similar reference numerals designate the same or similar components throughout the figures thereof and description.
In the description, the word "caller" designates a first user (or his/her user agent) that uses a service implementing the method according to the invention for automatically discovering the social network identifiers and statuses of a second user who is a contact registered in a personal directory of the user. The second user (or his/her user agent) is designated by the word "callee" though a call will not be necessarily set up after discovering the social network identifiers and statuses of the callee.
- Figure 1 illustrates a first embodiment of the method according to the invention, in an IMS network, with an example in which the callee and the caller have subscribed to a service implementing the method according to the invention.
- Figure 2 illustrates the first embodiment of the method according to the invention, in an IMS network, with an example in which the caller has subscribed to a service implementing the method according to the invention but the callee has not.
- Figure 3 illustrates a second embodiment of the method according to the invention, in the Web with the Hypertext Transfer Protocol (HTTP), with an example in which a first callee and the caller have subscribed to a service implementing the method according to the invention, and a second callee has not.

### DETAILED DESCRIPTION OF THE PREFERRED EMBODIMENTS

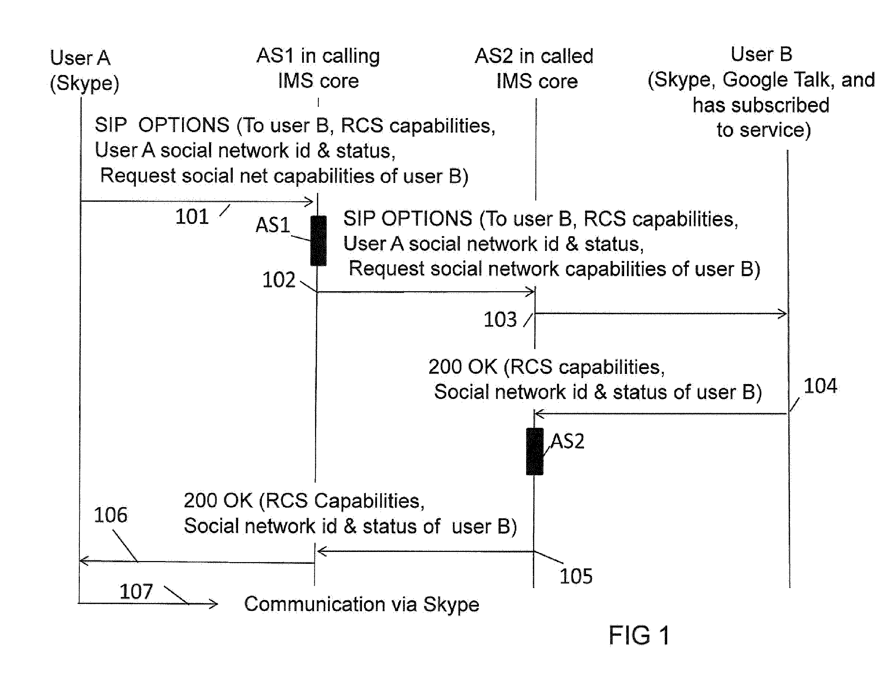

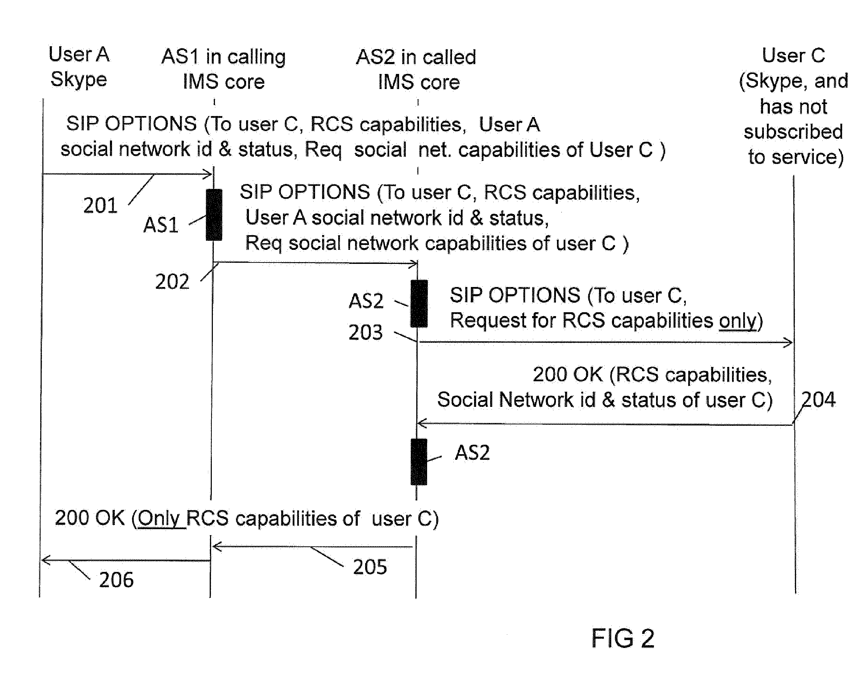

The first embodiment illustrated by examples on **Figures 1** **and** **2** relies on the Rich Communication Services (RCS-e) based on the Internet Protocol Multimedia Subsystem (IMS). Main features of RCS are:
- Enhanced Phonebook: service capabilities and enhanced contacts information such as presence and service discovery.
- Enhanced Messaging: enables a large variety of messaging options including chat, emoticons, location share and file sharing.
- Enriched Calls: enables multimedia content sharing during a voice call, video call and video sharing.
The Global Mobile System Association (GSMA) standardization group has defined, in the RCS-e standard a way to discover RCS capabilities through a process based on sending "OPTIONS" messages of the Session Initiation Protocol (SIP). This latter is a signaling protocol, widely used for controlling multimedia communication sessions such as voice and video calls over Internee Protocol (IP) networks.
The protocol SIP defines the messages that are sent between peers for establishment, termination and other essential elements of a call. A SIP user agent performs the role of a user agent client, which sends SIP requests; and a user agent server receives the requests and returns a SIP response.
A SIP request message "OPTIONS" enables a user agent to query another user agent, or a proxy server, as to its capabilities, i.e. it enables a client to discover information about: the supported methods, content types, extensions, codecs, etc, without "ringing" the other party. For example, before a client sends an INVITE SIP message containing a "Require" header field, the client can query the destination user agent server with an OPTIONS message to check whether the required service is supported by the destination user agent. In particular, this capability and service discovery enables a caller to know the subset of RCS-e services that is available to access and/or communicate with a callee.

A first embodiment of the proposed method is based on an enhanced OPTIONS SIP message and an enhanced 200 OK message.

The enhanced OPTIONS SIP message comprises some additional SIP headers specific for requesting:
-- a list of the social network identifiers corresponding to the social networks to which the callee has subscribed;
-- and the current statuses of the callee in the corresponding social networks.

Preferably, it further comprises a list of the social network identifiers corresponding to the social network to which the caller A has subscribed and the current statuses of the caller A in the corresponding social networks.

The enhanced 200 OK message comprises some additional SIP headers specific for carrying a list of the social network identifiers corresponding to the social networks to which the callee has subscribed; and the current statuses of the callee in the corresponding social networks. Thanks to the additional SIP headers to the OPTIONS SIP message and to the 200 OK message, a caller having only the classical phone number of a callee is able to get all the social network identifiers and the current statuses of this callee in the corresponding social networks. Then the terminal of caller can reach the callee with an OTT application corresponding to a social network selected among the social networks of the callee, and according to the statuses of the callee in his/her social networks, and according to a priority derived from caller and callee preferences if several social networks can be used.

Preferably, the enhanced OPTIONS SIP message further comprises some additional SIP headers specific for carrying a list of the social network identifiers corresponding to the social networks to which the caller has subscribed; and the current statuses of the caller in the corresponding social networks.
Thanks to these additional SIP headers to the OPTIONS SIP message, the callee receives all the social network identifiers and the current statuses of the caller in the corresponding social networks, without sending any request message. Later the terminal of callee can reach the caller with an OTT application corresponding to a social network selected among the social networks to which the caller is presently connected, and according to a local priority if several social networks can be used.

**Figure 1** illustrates a first embodiment of the method according to the invention, in an IMS network, with an example in which the callee (user B) and the caller (User A) have subscribed to a service implementing the method according to the invention, for automatically discovering the social network identifiers and statuses of a user. For instance, the caller A has subscribed to the social network Skype. Currently Skype and an IMS client are currently running at the caller's end. The caller A knows the IMS identifier of the callee B (A number with a format according to the ITU-T recommendation E164). The callee B has subscribed to the social networks Skype and GoogleTalk. The callee B has launched only Google Talk and an IMS client.
**Step 101:** Periodically, the IMS user agent of the caller (user A) sends, to a calling IMS core, an enhanced OPTIONS SIP message containing the IMS identifier of the callee (user B), and requesting the RCS capabilities and the social network capabilities of the callee, i. e. the list of the social network identifiers corresponding to the social networks to which the callee has subscribed; and the current statuses of the callee in the corresponding social networks.
Preferably the enhanced OPTIONS SIP message also carries a list of the social network identifiers corresponding to the social network to which the caller A has subscribed; and the current statuses of the caller A in the corresponding social network, and the IMS identifier of the caller. In this example, it carries the identifier of user A in the social network Skype, and the status ON.
**Step 102:** In the calling IMS core, an application server AS1 receives the enhanced OPTIONS message and checks if the sender (user A) has subscribed to the service for automatically discovering the social network identifiers and statuses of a user. Then it sends a second request message towards the callee B:
-- If the checking is positive, the second request message is an enhanced OPTIONS SIP message requesting the RCS capabilities and the social network capabilities of the user B. It contains the list of the social network identifiers corresponding to the social network to which the caller A has subscribed; and the current statuses of the caller A in the corresponding social networks.
-- If the checking is negative, the second request message is a classical OPTIONS SIP message requesting RCS capabilities but not requesting the social network capabilities of the user B. It does not contain the list of the social network identifiers corresponding to the social network to which the caller A has subscribed; and the current statuses of the caller A in the corresponding social networks.

In this example, the checking is positive because the user A has subscribed to the service enabling a first user to automatically discover the social network identifiers of a second user and the respective statuses of this second user in these social networks.
**Step 103:** In the called IMS core, an application server AS2 receives the enhanced OPTIONS message and checks if the destination user (user B) has subscribed to the service for automatically discovering the social network identifiers and statuses of a user:
-- If the checking is positive, it sends a third request message that is an enhanced OPTIONS message requesting the RCS capabilities and the social network capabilities of the user B. It contain the list of the social network identifiers corresponding to the social network to which the caller A has subscribed; and the current statuses of the caller A in the corresponding social networks.
-- If the checking is negative, it sends a third request message that is a classical OPTIONS message requesting RCS capabilities but not requesting the social network capabilities of the user B. It does not contain the list of the social network identifiers corresponding to the social network to which the caller A has subscribed; and the current statuses of the caller A in the corresponding social networks.

In this example, the checking is positive because the user B has subscribed to the service enabling a first user to automatically discover the social network identifiers of a second user and the respective statuses of this second user in these social networks.
**Step 104:** The callee B answers to the called IMS core by sending a response message that is an enhanced 200 OK message comprising: the RCS capabilities of the terminal of user B and the list of the social network identifiers corresponding to the social networks (Skype, Google Talk) to which the callee B has subscribed; and the current statuses (ON, ON) of the callee B in the corresponding social networks.
**Step 105:** In the called IMS core, an application server AS2 receives the enhanced 200 OK message and checks if the destination (user B) has subscribed to the service for automatically discovering the social network identifiers and statuses of a user:
-- if the checking is positive, it sends a second response message towards the user A, this message being an enhanced 200 OK SIP message carrying the RCS capabilities and the social network capabilities of the terminal of user B.
-- if the checking is negative, it sends a third request message to the user A, this message being a classical 200 OK SIP message only carrying the RCS capabilities of the terminal of user B.
In this example, the user B has subscribed to the service, so the application server AS2 sends an enhanced 200 OK message to the calling IMS core, this message carrying the RCS capabilities and the social network capabilities of the terminal of user B.
**Step 106:** The calling IMS core forwards it to the user agent of the caller A. Thanks to this discovery procedure, periodically launched by the user agent of the user A, the terminal of user A receives the Skype identifier, the Googletalk identifier, and the statuses of the user B respectively in the social networks Skype and Googletalk. So the user agent of the user A has information enabling to automatically set up a phone call or sending a written message.
Of course, the user B could have been reached via the IMS network if the users A and B had not used a same social network.
Conversely, the user agent of the user B receives the Skype identifier and the IMS identifier of the user A, along with the status of the user A in the social network Skype.
**Step 107:** Later, when the user A wants to call B, or to send a short written message to user B, the user A must do a single operation: selecting the name of the user B. The user agent of the user A knows that it can join the user B either with Skype or the IMS network. In addition, it knows that the user A has predetermined priorities such that Skype (for instance) is preferred rather than the IMS network. Then the user agent of the user A automatically calls the user B via the Skype social network, or opens the messaging interface of Skype.
Of course the user agent of user A periodically executes the same processing for each contact that is registered in the personal directory of the user A.

**Figure 2** illustrates the first embodiment of the method according to the invention, in an IMS network, with an example in which the caller A has subscribed to a service implementing the method according to the invention for automatically discovering the social network identifiers and statuses of a user, but the caller (User C) has not.
For instance, the caller A has subscribed to Skype. The caller A has launched Skype and an IMS client. The callee C has subscribed to Skype and has launched Skype and an IMS client. The caller A knows the IMS identifier of the user C.
**Step 201:** Periodically, the IMS user agent of the caller (user A) sends, to a calling IMS core, an enhanced OPTIONS SIP message containing the IMS identifier of the callee C, and requesting the RCS capabilities and the social network capabilities of the callee C.
The enhanced OPTIONS SIP message also carries a list of social network identifiers of the caller A (i. e. Skype), with the current statuses of the caller in the corresponding social networks (ON). In addition, it carries the IMS identifier of the caller A.
**Step 202:** In the calling IMS core, the application server AS1 receives the enhanced OPTIONS message and checks if the sender (user A) has subscribed to a social network. Then it sends a second request message towards the callee C:
-- If the checking is positive, the second request message is an enhanced OPTIONS SIP message requesting the RCS capabilities and the social network capabilities of the user C. It contains the list of the social network identifiers corresponding to the social network to which the caller A has subscribed; and the current statuses of the caller A in the corresponding social networks.
-- If the checking is negative, the second request message is a classical OPTIONS SIP message requesting RCS capabilities but not requesting the social network capabilities of the user C. It does not contain the list of the social network identifiers corresponding to the social network to which the caller A has subscribed; and the current statuses of the caller A in the corresponding social networks.
In this example, the checking is positive because the user A has subscribed to the service enabling a first user to automatically discover the social network identifiers of a second user and the respective statuses of this second user in these social networks.
**Step 203:** In the called IMS core, the application server AS2 receives the enhanced OPTIONS message and then checks if the destination user (user C) has subscribed to the service implementing the method according to the invention for automatically discovering the social network identifiers and statuses of a user:
-- If the checking is positive, it sends a third request message that is an enhanced OPTIONS message requesting the RCS capabilities and the social network capabilities of the user C. It contain the list of the social network identifiers corresponding to the social network to which the caller A has subscribed; and the current statuses of the caller A in the corresponding social networks.
-- If the checking is negative, it sends a third request message that is a classical OPTIONS message requesting RCS capabilities but not requesting the social network capabilities of the user C. It does not contain the list of the social network identifiers corresponding to the social network to which the caller A has subscribed; and the current statuses of the caller A in the corresponding social networks.
In this example, the checking is negative because the user C has not subscribed to the service implementing the method according to the invention for automatically discovering the social network identifiers and statuses of a user. So it is not allowed to receive the social network capabilities of a caller (User A).
**Step 204:** The callee C answers to the application server AS2 in the called IMS core by sending an enhanced 200 OK SIP message comprising the RCS capabilities of the terminal of user C. In this example, it further comprises the list of the social network capabilities identifiers corresponding to the single social network (Skype) to which the callee C has subscribed, and the current status (ON) of the callee C in the corresponding social network, though they were not requested. **Step 205:** In the called IMS core, the application server AS2 receives the enhanced 200 OK message and checks again if the destination (User C) has subscribed to a service implementing the method according to the invention for automatically discovering the social network identifiers and statuses of a user:
-- If not, the application server AS2 sends a classical 200 OK SIP message to the calling IMS core. This message (RCS only) contains the capabilities of the terminal of user C, without the list of the social network identifiers corresponding to the single social network (Skype) to which the callee C has subscribed; and without the current status (ON) of the callee C in the corresponding social network.
-- If yes, the application server AS2 sends an enhanced 200 OK SIP message to the calling IMS core. This message contains the RCS capabilities of the terminal of user C, with the list of the social network identifiers corresponding to the single social network (Skype) to which the callee C has subscribed; and with the current status (ON) of the callee C in the corresponding social network.
In the example of figure 2, the user C has not subscribed, so the list of the social network identifiers, corresponding to the single social network (Skype) to which the callee C has subscribed, and the current status (ON) of the callee C in the corresponding social network, are not forwarded in the 200 OK message sent to the calling IMS core.
**Step 206:** The calling IMS core forwards the classical 200 OK SIP message to the caller A, i. e. the user A does not receive the list of the social network identifiers corresponding to the single social network (Skype) to which the callee C has subscribed; and without the current status (ON) of the callee C in the corresponding social network.
Later, when the user A wants to call the user C, this user A must do the classical process since he/she does not know by which communication service the user C can be reached. The user A may have to try several communication services before finding one (Skype) enabling to contact the user C.

It is assumed that all the users that want to use the method according to the invention are registered in the applications servers AS1 and AS2 beforehand.

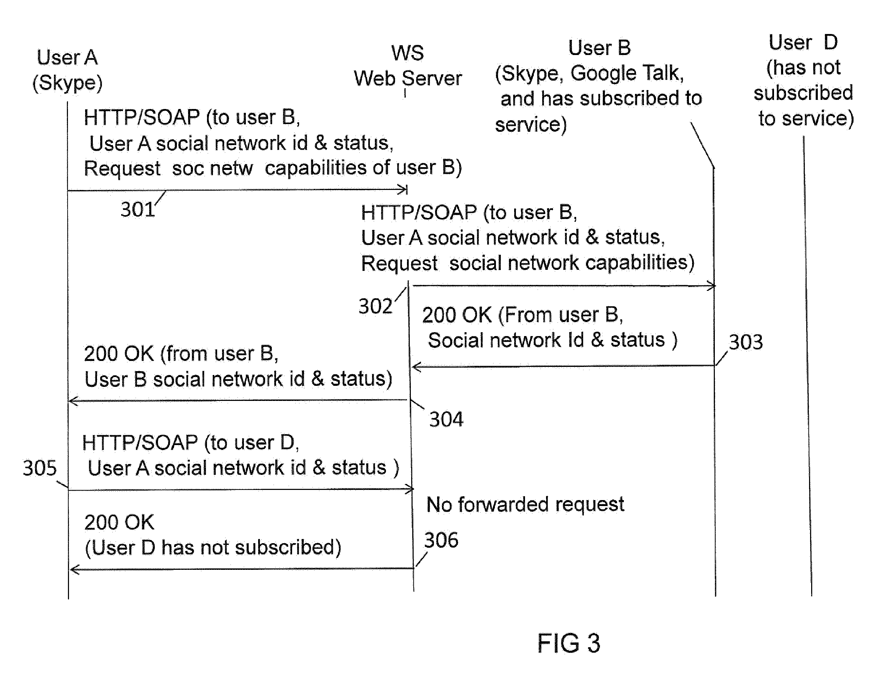

**Figure 3** illustrates a second embodiment of the method according to the invention, in the Web with the Hypertext Transfer Protocol (HTTP), with an example in which a first callee (user B) and the caller (User A) have subscribed to a service implementing the method according to the invention, and a second callee (user D) has not. It is assumed that all the users that want to use this second embodiment of the method according to the invention have been registered in a central web server SW beforehand.
**Step 301:** Periodically, the caller A sends, to the central Web server WS, a request message containing the web identifier (Internet Protocol Address) of the first callee (User B) and explicitly requesting the social network capabilities of the user B, i. e. the list of the social network identifiers corresponding to the social networks to which the callee B has subscribed; and the current statuses of the callee B in the corresponding social networks. This request message may be formatted according to the Simple Object Access Protocol (SOAP) and be transported according to the Hypertext Transfer Protocol (HTTP).
Preferably this request message also carries a list of social network identifiers of the caller A (Skype in this example), with the current statuses of the caller A in the corresponding social networks (Status is ON for Skype in this example). In addition, it carries the Web identifier of the caller A.
**Step 302:** The Web server WS checks if the destination user (callee B) is registered in this server, that is to say if the callee B has subscribed to a service implementing the second embodiment of the method according to the invention. Then:
-- If the checking is positive, it sends, to the callee, a second request message that requests the list of the social network identifiers corresponding to the social networks to which the callee has subscribed and the current statuses of the callee in the corresponding social networks.
-- If the checking is negative, it does not send any second request message to the callee.
In this example, the callee B has subscribed to a service implementing the method according to the invention. So the web server WS forwards the request message to the callee B. This latter can benefit of the knowing the social network capabilities of the user A, and it is invited to respond.
**Step 303 :** The user agent of the callee B answers by sending to the web server WS an enhanced 200 OK SIP message carrying the list of the social network identifiers of the user B, with the current statuses of the user B in the corresponding social networks: Skype only in this example.
**Step 304:** The web server WS forwards this enhanced 200 OK SIP message to the user A.

**Step 305:** Similarly, the caller A periodically sends, to the central Web server WS, a request message containing the web identifier of the second callee (User D). This message requests the social network capabilities of the user D. As in step 301, this request message may be formatted according to the Simple Object Access Protocol (SOAP) and be transported according to the Hypertext Transfer Protocol (HTTP).
Preferably this request message also carries a list of social network identifiers of the caller A, with the current statuses of the caller A in the corresponding social network. In this example, it is the identifier of user A in the Skype social network, and its status: ON. In addition, it carries the Web identifier of the caller A.
**Step 306:** The Web server WS checks if the second caller D is registered in this server, i. e. if it has subscribed to a service implementing the method according to the invention. In this example, the callee D has not. So the web server WS does not forward the request message to the user D. It answers to the caller A by an enhanced 200 OK SIP message containing an indication that the user D is not currently registered in the web server WS. So the user D has no opportunity to send its social network capabilities, and the user A cannot automatically set up a communication via the web because it didn't receive any information from the user D about its social network capabilities. The user A must do the classical process since he/she does not know by which communication service the user D can be reached. The user A may have to try several communication services before finding one enabling to contact the user D.

SOAP is only one example of protocol to use. In other embodiments, the protocol could be a proprietary protocol over HTTP: it could be based on HTTP/PHP/HTML5 (web application).

In the servers AS1, AS2, WS the users that have subscribed to a service according to the invention are preferably identified by their respective phone numbers, as defined by the standard E164; but there are other possibilities:
- In a SIP network, a SIP uniform resource identifier can be used instead.
- In a HTTP network, an e-mail address or a social network user identifier can be used instead.

## Claims

1. A method enabling a first user (A) to automatically discover the social network identifiers of a second user (B; C) and the respective statuses of this second user in the corresponding social networks, comprising the steps of:
- receiving (101; 201; 301; 305), in a first server (AS1; WS), a request message from the first user, this request message containing an identifier of the second user, and requesting the list of the social network identifiers corresponding to the social networks to which the second user has subscribed; and the current statuses of the second user respectively in the corresponding social networks;
- checking, in the first server (AS1; WS), if the first user (A) has subscribed to a service for discovering the social network identifiers of a second user and the respective statuses of this second user in these social networks;
- and sending (102; 202; 302) a second request message from the first server (AS1; WS) towards the second user (B; C):
-- if the checking in the first server (AS1) is positive, the second request message requests the list of the social network identifiers corresponding to the social networks to which the second user has subscribed and the current statuses of the second user in the corresponding social networks;
-- if the checking is negative, the second request message does not request the list of the social network identifiers corresponding to the social networks to which the second user has subscribed and the current statuses of the second user in the corresponding social networks.

2. Method according to claim 1, further comprising the steps of:
- receiving (102; 202; 301) in a second server (AS2; SW), a request message sent by the first server (AS1) and destined to a second user (B; C), this message requesting the list of the social network identifiers corresponding to the social networks to which the second user (B; C) has subscribed, and the current statuses of the second user in the corresponding social networks;
- checking, in the second server (AS2; SW), if the second user (B; C) has subscribed to a service for discovering the social network identifiers of a user and the respective statuses of this second user in these social networks;
- and:
-- if the checking in the second server (AS2; SW) is positive, sending (103) a third request message from the second server (AS2) towards the second user (B; C), this third request message requesting the list of the social network identifiers corresponding to the social networks to which the second user has subscribed and the current statuses of the second user in the corresponding social networks;
-- if the checking in the second server (AS2; SW) is negative, sending (203) no third request message requesting the list of the social network identifiers corresponding to the social networks to which the second user has subscribed and the current statuses of the second user in the corresponding social networks.

3. Method according to claim 1, further comprising the steps of:
- receiving (104; 204), in a second server (AS2), a first response message from the second user (B; C), this response message comprising the list of the social network identifiers corresponding to the social networks to which the second user has subscribed and the current statuses of the second user in the corresponding social networks;
- checking, in the second server (AS2), if the second user (B; C) has subscribed to a service for discovering the social network identifiers of a user and the respective statuses of this second user in these social networks, and sending a second response message from the second server (AS2; SW) towards the first user (A):
-- if the checking is positive (105-106), the second response message comprising the list of the social network identifiers corresponding to the social networks to which the second user has subscribed and the current statuses of the second user in the corresponding social networks;
-- if the checking is negative (205-206) the second response message not comprising the list of the social network identifiers corresponding to the social networks to which the second user has subscribed and the current statuses of the second user in the corresponding social.

4. Method according to claim 1, wherein the first (101; 201; 301) and the second request message (102; 202; 302) further comprises an identifier of the first user, the list of the social network identifiers corresponding to the social networks to which the first user has subscribed, and the current statuses of the first user respectively in the corresponding social networks;
and wherin:
-- if the checking in the first server (AS1) is positive, the second request message (102; 202) contains the list of the social network identifiers corresponding to the social network to which the caller (A) has subscribed; and the current statuses of the caller (A) in the corresponding social networks;
-- if the checking in the first server (AS1) is negative, the second request message does not contain the list of the social network identifiers corresponding to the social network to which the caller (A) has subscribed; and the current statuses of the caller (A) in the corresponding social networks.

5. Method according to claim 2, wherein the third request message (103; 203) further comprises an identifier of the first user, the list of the social network identifiers corresponding to the social networks to which the first user has subscribed, and the current statuses of the first user respectively in the corresponding social networks if the second user has subscribed to the service; and wherin:
-- if the checking in the second server (AS2) is positive, the third request message further contains the list of the social network identifiers corresponding to the social network to which the caller (A) has subscribed; and the current statuses of the caller (A) in the corresponding social networks;
-- if the checking in the second server (AS2; SW) is negative, the third request message (203) does not contain the list of the social network identifiers corresponding to the social network to which the caller (A) has subscribed; and the current statuses of the caller (A) in the corresponding social networks.

6. Method according to claim 1, wherein the first and second request message (101; 201) are an enhanced OPTIONS message of the Session Initiation Protocol

7. Method according to claim 2, wherein the third request message (103; 203) is an enhanced OPTIONS message of the Session Initiation Protocol.

8. Method according to claim 2, wherein the first, the second, and the third response message (104, 105, 106; 204, 205, 206) are enhanced 200 OK messages of the Session Initiation Protocol.

9. Method according to claim 1, wherein the first and the second response message (104, 105; 204, 205) are enhanced 200 OK messages of the Session Initiation Protocol.

10. Method according to claim 1, wherein the request messages and the response messages are formatted according to the Simple Object Access Protocol and are transported according to the Hypertext Transfer Protocol.

11. A user agent comprising machine executable program instructions, which, when executed on a computer, cause the computer to perform all the method steps of sending (101; 201; 301; 305), from a first user (A) to a server (AS1; WS), a request message containing an identifier of a second user (B; C; D) and requesting the list of the social network identifiers corresponding to the social networks to which the second user has subscribed; and the current statuses of the second user respectively in the corresponding social networks.

12. A user agent according to claim 11, comprising machine executable program instructions, which, when executed on a computer, cause the computer to perform all the method steps of sending (101; 201; 301, 305), from a first user (A) to a server (AS1; WS), a request message containing an identifier of the first user, the list of the social network identifiers corresponding to the social networks to which the first user has subscribed, and the current statuses of the first user respectively in the corresponding social networks.

13. A user agent comprising machine executable program instructions, which, when executed on a computer, cause the computer to perform all the method steps of receiving (106; 206; 304; 306), from a second user (B; C) a response message comprising the list of the social network identifiers corresponding to the social networks to which the second user has subscribed; and the current statuses of the second user in the corresponding social networks.

14. An application server (AS1; WS) comprising machine executable program instructions, which, when executed on a computer, cause the computer to perform all the method steps of:
- receiving (101; 201; 301), from a first user (A), a first request message containing an identifier of a second user (B) and requesting the list of the social network identifiers corresponding to the social networks to which the second user has subscribed; and the current statuses of the second user respectively in the corresponding social networks;
- checking if the first user (A) has subscribed to a service for discovering the social network identifiers of a user and the respective statuses of this user in the corresponding social networks;
- and sending (102-103; 202-203; 302) a second request message from the first server (AS1; WS) towards the second user:
-- if the checking is positive, the second request message requesting the list of the social network identifiers corresponding to the social networks to which the second user has subscribed and the current statuses of the second user in the corresponding social networks,
-- if the checking is negative, the second request message not requesting the list of the social network identifiers corresponding to the social networks to which the second user has subscribed and the current statuses of the second user in the corresponding social networks.

15. An application server (AS1; WS) according to claim 14 further comprising machine executable program instructions, which, when executed on a computer, cause the computer to perform all the method steps of:
- receiving (101; 201; 301), from said first user (A), in a first request message, the list of the social network identifiers corresponding to the social networks to which the first user (A) has subscribed; and the current statuses of the first user (A) respectively in the corresponding social networks;- and :
-- if the checking is positive, sending a second request message (102; 202) that contains the list of the social network identifiers corresponding to the social network to which the caller (A) has subscribed; and the current statuses of the caller (A) in the corresponding social networks;
-- if the checking is negative, sending a second request message that does not contain the list of the social network identifiers corresponding to the social network to which the caller (A) has subscribed; and the current statuses of the caller (A) in the corresponding social networks.

16. An application server (AS2) comprising machine executable program instructions, which, when executed on a computer, cause the computer to perform all the method steps of:
- receiving (104; 204; 303), from the second user (B; C), a response message comprising the list of the social network identifiers corresponding to the social networks to which the second user (B; C) has subscribed; and the current statuses of the second user in the corresponding social networks;
- checking if the second user has subscribed to a service for discovering the social network identifiers of a user and the respective statuses of this user in these social networks, and sending a second response message from the second server (AS2; SW) towards the first user (A):
-- if the checking is positive (105-106), the second response message comprising the list of the social network identifiers corresponding to the social networks to which the second user (B; C) has subscribed and the current statuses of the second user (B; C) in the corresponding social networks;
-- if the checking is negative (205-206) the second response message not comprising the list of the social network identifiers corresponding to the social networks to which the second user (B; C) has subscribed and the current statuses of the second user (B; C) in the corresponding social.

## Amended claims

### Amended claims in accordance with Rule 137(2) EPC.

1. A method enabling a first user (A) to automatically discover the social network identifiers of a second user (B; C) and the respective statuses of this second user in the corresponding social networks, comprising the steps of:
- receiving (101; 201; 301; 305), in a first server (AS1; WS), a request message from the first user, this request message containing an identifier of the second user, and requesting, from the second user (B; C), the list of the social network identifiers corresponding to the social networks to which the second user has subscribed; and the current statuses of the second user respectively in the corresponding social networks;
- checking, in the first server (AS1; WS), if the first user (A) has subscribed to a service for discovering the social network identifiers of a second user and the respective statuses of this second user in these social networks;
- and sending (102; 202; 302) a second request message from the first server (AS1; WS) towards the second user (B; C):
-- if the checking in the first server (AS1) is positive, the second request message requests, from the second user (B; C), the list of the social network identifiers corresponding to the social networks to which the second user has subscribed and the current statuses of the second user in the corresponding social networks;
-- if the checking is negative, the second request message does not request the list of the social network identifiers corresponding to the social networks to which the second user has subscribed and the current statuses of the second user in the corresponding social networks.

2. Method according to claim 1, further comprising the steps of:
- receiving (102; 202; 301) in the second server (AS2; SW), a request message sent by the first server (AS1) and destined to the second user (B; C), this message requesting the list of the social network identifiers corresponding to the social networks to which the second user (B; C) has subscribed, and the current statuses of the second user in the corresponding social networks;
- checking, in the second server (AS2; SW), if the second user (B; C) has subscribed to a service for discovering the social network identifiers of a user and the respective statuses of this second user in these social networks;
- and:
-- if the checking in the second server (AS2; SW) is positive, sending (103) a third request message from the second server (AS2) towards the second user (B; C), this third request message requesting, from the second user (B; C), the list of the social network identifiers corresponding to the social networks to which the second user has subscribed and the current statuses of the second user in the corresponding social networks;
-- if the checking in the second server (AS2; SW) is negative, sending (203) no third request message requesting the list of the social network identifiers corresponding to the social networks to which the second user has subscribed and the current statuses of the second user in the corresponding social networks.

3. Method according to claim 1, further comprising the steps of:
- receiving (104; 204), in a second server (AS2), a first response message from the second user (B; C), this response message comprising the list of the social network identifiers corresponding to the social networks to which the second user has subscribed and the current statuses of the second user in the corresponding social networks;
- checking, in the second server (AS2), if the second user (B; C) has subscribed to a service for discovering the social network identifiers of a user and the respective statuses of this second user in these social networks, and sending a second response message from the second server (AS2; SW) towards the first user (A):
-- if the checking is positive (105-106), the second response message comprising the list of the social network identifiers corresponding to the social networks to which the second user has subscribed and the current statuses of the second user in the corresponding social networks;
-- if the checking is negative (205-206) the second response message not comprising the list of the social network identifiers corresponding to the social networks to which the second user has subscribed and the current statuses of the second user in the corresponding social.

4. Method according to claim 1, wherein the first (101; 201; 301) and the second request message (102; 202; 302) further comprises an identifier of the first user, the list of the social network identifiers corresponding to the social networks to which the first user has subscribed, and the current statuses of the first user respectively in the corresponding social networks;
and wherin:
-- if the checking in the first server (AS1) is positive, the second request message (102; 202) contains the list of the social network identifiers corresponding to the social network to which the caller (A) has subscribed; and the current statuses of the caller (A) in the corresponding social networks;
-- if the checking in the first server (AS1) is negative, the second request message does not contain the list of the social network identifiers corresponding to the social network to which the caller (A) has subscribed; and the current statuses of the caller (A) in the corresponding social networks.

5. Method according to claim 2, wherein the third request message (103; 203) further comprises an identifier of the first user, the list of the social network identifiers corresponding to the social networks to which the first user has subscribed, and the current statuses of the first user respectively in the corresponding social networks if the second user has subscribed to the service; and wherin:
-- if the checking in the second server (AS2) is positive, the third request message further contains the list of the social network identifiers corresponding to the social network to which the caller (A) has subscribed; and the current statuses of the caller (A) in the corresponding social networks;
-- if the checking in the second server (AS2; SW) is negative, the third request message (203) does not contain the list of the social network identifiers corresponding to the social network to which the caller (A) has subscribed; and the current statuses of the caller (A) in the corresponding social networks.

6. Method according to claim 1, wherein the first and second request message (101; 201) are an enhanced OPTIONS message of the Session Initiation Protocol.

7. Method according to claim 2, wherein the third request message (103; 203) is an enhanced OPTIONS message of the Session Initiation Protocol.

8. Method according to claim 2, wherein the first, the second, and the third response message (104, 105, 106; 204, 205, 206) are enhanced 200 OK messages of the Session Initiation Protocol.

9. Method according to claim 1, wherein the first and the second response message (104, 105; 204, 205) are enhanced 200 OK messages of the Session Initiation Protocol.

10. Method according to claim 1, wherein the request messages and the response messages are formatted according to the Simple Object Access Protocol and are transported according to the Hypertext Transfer Protocol.

11. A user agent comprising machine executable program instructions, which, when executed on a computer, cause the computer to perform all the method steps of sending (101; 201; 301; 305), from a first user (A) to a server (AS1; WS), a request message containing an identifier of a second user (B; C; D) and requesting, from the second user (B; C), the list of the social network identifiers corresponding to the social networks to which the second user has subscribed; and the current statuses of the second user respectively in the corresponding social networks.

12. A user agent according to claim 11, comprising machine executable program instructions, which, when executed on a computer, cause the computer to perform all the method steps of sending (101; 201; 301, 305), from a first user (A) to a server (AS1; WS), a request message containing an identifier of the first user, the list of the social network identifiers corresponding to the social networks to which the first user has subscribed, and the current statuses of the first user respectively in the corresponding social networks.

13. A user agent comprising machine executable program instructions, which, when executed on a computer, cause the computer to perform all the method steps of receiving (106; 206; 304; 306), from a second user (B; C) a response message comprising the list of the social network identifiers corresponding to the social networks to which the second user has subscribed; and the current statuses of the second user in the corresponding social networks.

14. An application server (AS1; WS) comprising machine executable program instructions, which, when executed on a computer, cause the computer to perform all the method steps of:
- receiving (101; 201; 301), from a first user (A), a first request message containing an identifier of a second user (B) and requesting, from the second user (B; C), the list of the social network identifiers corresponding to the social networks to which the second user has subscribed; and the current statuses of the second user respectively in the corresponding social networks;
- checking if the first user (A) has subscribed to a service for discovering the social network identifiers of a user and the respective statuses of this user in the corresponding social networks;
- and sending (102-103; 202-203; 302) a second request message from the first server (AS1; WS) towards the second user:
-- if the checking is positive, the second request message requesting, from the second user (B; C), the list of the social network identifiers corresponding to the social networks to which the second user has subscribed and the current statuses of the second user in the corresponding social networks,
-- if the checking is negative, the second request message not requesting the list of the social network identifiers corresponding to the social networks to which the second user has subscribed and the current statuses of the second user in the corresponding social networks.

15. An application server (AS1; WS) according to claim 14 further comprising machine executable program instructions, which, when executed on a computer, cause the computer to perform alt the method steps of:
- receiving (101; 201; 301), from said first user (A), in a first request message, the list of the social network identifiers corresponding to the social networks to which the first user (A) has subscribed; and the current statuses of the first user (A) respectively in the corresponding social networks;- and :
-- if the checking is positive, sending a second request message (102; 202) that contains the list of the social network identifiers corresponding to the social network to which the caller (A) has subscribed; and the current statuses of the caller (A) in the corresponding social networks;
-- if the checking is negative, sending a second request message that does not contain the list of the social network identifiers corresponding to the social network to which the caller (A) has subscribed; and the current statuses of the caller (A) in the corresponding social networks.

16. An application server (AS2) comprising machine executable program instructions, which, when executed on a computer, cause the computer to perform all the method steps of:
- receiving (104; 204; 303), from the second user (B; C), a response message comprising the list of the social network identifiers corresponding to the social networks to which the second user (B; C) has subscribed; and the current statuses of the second user in the corresponding social networks;
- checking if the second user has subscribed to a service for discovering the social network identifiers of a user and the respective statuses of this user in these social networks, and sending a second response message from the second server (AS2; SW) towards the first user (A):
-- if the checking is positive (105-106), the second response message comprising the list of the social network identifiers corresponding to the social networks to which the second user (B; C) has subscribed and the current statuses of the second user (B; C) in the corresponding social networks;
-- if the checking is negative (205-206) the second response message not comprising the list of the social network identifiers corresponding to the social networks to which the second user (B; C) has subscribed and the current statuses of the second user (B; C) in the corresponding social.
